# EUROPÄISCHE PATENTSCHRIFT

(11) **EP 2 427 345 B1**
(45) Veröffentlichungstag und Bekanntmachung des Hinweises auf die Patenterteilung: **25.09.2019**
(21) Anmeldenummer: 10717160.5
(22) Anmeldetag: 06.05.2010
(51) Int. Cl.: B60N 2/68

(54) **LEHNENRAHMEN EINES FAHRZEUGSITZES**
SEAT BACK FRAME OF A VEHICLE SEAT
CHÂSSIS DE DOSSIER DE SIÈGE DE VÉHICULE

(30) Priorität: 08.05.2009 DE 102009025780
(43) Veröffentlichungstag der Anmeldung: 14.03.2012
(73) Patentinhaber: ThyssenKrupp Steel Europe AG, 47166 Duisburg (DE)
(72) Erfinder: MATTHEY, Cristina, 50858 Köln (DE); FLEHMING, Thomas, 40885 Ratingen (DE); ULRICHS, Andreas, 47443 Moers (DE)
(74) Vertreter: Cohausz & Florack
(86) Internationale Anmeldenummer: PCT/EP2010/056192
(87) Internationale Veröffentlichungsnummer: WO 2010/128108

(56) Entgegenhaltungen:
- DE-A1- 10 142 981
- DE-A1-102004 048 350
- DE-A1-102006 036 915
- GB-A- 2 297 687
- US-A- 5 439 272

## Beschreibung

Die Erfindung betrifft einen Lehnenrahmen für einen Fahrzeugsitz, welcher einen quer verlaufenden Rahmenbereich sowie zwei vertikal verlaufende Rahmenbereiche aufweist und U-förmig ausgebildet ist, wobei eine erste Halbschale aus einem Metall vorgesehen ist, welche jeweils einen Teilbereich der vertikal verlaufenden Rahmenbereiche des Lehnenrahmens und jeweils einen Teilbereich des quer verlaufenden Rahmenbereichs des Lehnenrahmens bildet.

Fahrzeugsitze für Kraftfahrzeuge weisen üblicherweise ein Sitzuntergestell auf, an welchem die Sitzlehne angebracht ist. Diese besteht aus einem Lehnenrahmen, welcher gepolstert und mit Stoffen und/oder Leder bezogen ist. Die Ausführungen der Lehnenrahmen unterscheiden sich, sofern ein Gurt in dem Fahrzeugsitz integriert ist oder nicht. Bei gurtintegrierten Fahrzeugsitzen ist nämlich eine besonders hohe Festigkeit des Lehnenrahmens gefordert, um im Falle eines Unfalles die auftretenden Kräfte aufnehmen und an die Befestigungspunkte des Fahrzeugsitzes weiterleiten zu können. Neben den anwendungsbezogenen Anforderungen ergibt sich im Allgemeinen im Automobilbau die Forderung nach einem möglichst geringen Gewicht des Lehnenrahmens und darüber hinaus eine möglichst kostengünstige Fertigung des Lehnenrahmens. Aus dem Stand der Technik sind hierzu unterschiedliche Ansätze bekannt.

Beispielsweise ist aus dem deutschen Gebrauchsmuster DE 20 2005 001 773 U1 ein Lehnenrahmen für einen Fahrzeugsitz bekannt, welcher kastenförmig ausgebildet ist, wobei die vertikalen und quer verlaufenden Lehnenrahmenbereiche durch jeweils ein Metallprofil bereitgestellt werden. Problematisch bei diesem Fahrzeugsitz ist, dass die Rahmenstruktur nicht ohne weiteres auf gurtintegrierte Fahrzeugsitze anpassbar ist und aus einer relativ hohen Anzahl von Einzelteilen besteht.

Ein U-förmiger Lehnenrahmen für einen Kraftfahrzeugsitz ist aus dem deutschen Gebrauchsmuster DE 296 22 299 U1 bekannt. Der U-förmige Lehnenrahmen besteht aus vertikalen Rahmenbereichen, die aus jeweils zwei Halbschalen hergestellt sind und welche über einen ebenfalls aus zwei Halbschalen bestehenden quer verlaufenden Rahmenbereich verbunden sind. Dieser Lehnenrahmen besteht also aus sechs Bauteilen. Ist einer der vertikal verlaufenden Rahmenbereiche zur Bereitstellung eines gurtintegrierten Fahrzeugsitzes stärker ausgebildet, so sind die Werkzeugkosten für die Herstellung einer entsprechenden Anzahl von Metallprofilen groß.

Die GB 2 297 687 A betrifft einen U-förmig gebogenen Lehnerahmen, der einen halbschalenartigen Querschnitt aufweist. Im quer verlaufenden Rahmenbereich ist ein weiteres gebogenes Blech vorgesehen, welches zusammen mit dem ersten Blech eine Führung für eine Kopfstütze zur Verfügung stellt.

Aus der DE 101 42 981 A1 ist ein Lehnenpolsterträger bestehend aus einem Grundblech und einem modularen Verstärkungsrahmen bekannt. Durch die modulare Bauweise ist der Montageaufwand aufgrund vieler austauschbarer Einzelteile erheblich.

Die DE 10 2004 048 350 A1 betrifft die Rückenlehne eines Fahrzeugsitzes bestehend aus der Verbindung einer tiefgezogenen Vorderschale und einer tiefgezogenen Hinterschale.

Die US 5,439,272 offenbart einen Fahrzeugsitz, wobei der Lehnenrahmen einen quer verlaufenden Rahmenbereich und zwei seitlich verlaufende Rahmenbereiche aufweist.

Schließlich betrifft die DE 10 2006 036915 A1 einen Fahrzeugsitzrahmen, der ein Strukturteil bestehend aus ein oder mehr U-Profilen sowie einen plattenförmigen Strukturkörper umfasst.

Die bisher bekannten Lösungen zur Bereitstellung eines Lehnenrahmens für einen Fahrzeugsitz sind daher nicht auf die Verwendung einer möglichst geringen Anzahl an Teilen optimiert und lassen auch eine einfache Anpassung an einen Lehnenrahmen für gurtintegrierte Fahrzeugsitze nicht zu.

Hiervon ausgehend liegt der vorliegenden Erfindung die Aufgabe zugrunde, einen gattungsgemäßen Lehnenrahmen bereitzustellen, welcher ein Minimum an Bauteilen aufweist und gleichzeitig die Bereitstellung eines Lehnenrahmens für gurtintegrierte Fahrzeugsitze auf einfache Weise zulässt.

Gemäß der Lehre der vorliegenden Erfindung wird die aufgezeigte Aufgabe dadurch gelöst, dass ein zweites Halbschalenblech vorgesehen ist, welches mit der ersten Halbschale stoffschlüssig im Stumpfstoß verbunden ist und zumindest den quer verlaufenden Rahmenbereich des Lehnenrahmens verstärkt.

Im Ergebnis werden erfindungsgemäß lediglich zwei Halbschalenbleche verwendet, um den Lehnenrahmen eines Fahrzeugsitzes zur Verfügung zu stellen. Durch die Verwendung von Halbschalenblechen, welche vorzugsweise tiefgezogen werden, können komplexe Strukturen bereitgestellt werden, die in der Lage sind, die im Lehnenrahmen auftretenden Kräfte aufzunehmen und abzuleiten. Die stoffschlüssige Verbindung zwischen den Halbschalenblechen kann durch Schweißen, Löten oder Verkleben bereitgestellt werden. Die Verstärkung des quer verlaufenden Rahmenbereichs des Lehnenrahmens wird über das zweite Halbschalenblech erreicht, das in diesem Bereich mit dem ersten Halbschalenblech, im Stumpfstoß verbunden ist.

Gemäß der Erfindung ist das zweite Halbschalenblech U-förmig ausgebildet und verstärkt zusätzlich zumindest teilweise beide vertikal verlaufenden Rahmenbereiche des Lehnenrahmens. Die U-förmige Ausbildung des zweiten Halbschalenblechs ermöglicht, dass auch die Teilbereiche der vertikal verlaufenden Rahmenbereiche des Lehnenrahmens auf einfache Weise verstärkt werden können.

Ist der Lehnenrahmen gemäß einer nächsten Ausgestaltung des erfindungsgemäßen Lehnenrahmens für einen gurtintegrierten Fahrzeugsitz vorgesehen und verstärkt das zweite Halbschalenblech mindestens einseitig einen der vertikal verlaufenden Rahmenbereiche vollständig, kann auf einfache Art und Weise ein Lehnenrahmen für gurtintegrierte Fahrzeugsitze bereitgestellt werden, welcher einen verstärkten vertikal verlaufenden Rahmenbereich zur Aufnahme der aufgrund der Gurtintegration auftretenden Kräfte aufweist. Insbesondere muss lediglich genau ein Bauteil, nämlich das zweite Halbschalenblech, geändert werden, damit der Lehnenrahmen für einen gurtintegrierten Fahrzeugsitz geeignet ist. Dies erniedrigt die Werkzeugkosten und damit die Kosten für die Herstellung entsprechender Lehnenrahmen deutlich.

Eine weitere Möglichkeit, den erfindungsgemäßen Lehnenrahmen zu verbessern, besteht darin, dass mindestens eine der Halbschalen aus einem "Tailored Blank" hergestellt ist. Dieses "Tailored Blank" besteht aus mindestens zwei verschiedenen Blechen, welche aus an die Belastung spezifisch angepassten Materialien mit entsprechenden Wanddicken bestehen. Die Verwendung dieser "Tailored Blanks" zur Herstellung der Halbschalen für den Lehnenrahmen ermöglicht damit eine weitere Reduzierung des Gewichts.

Alternativ kann die oben aufgezeigte Aufgabe für einen nicht erfidungsgemäßen Lehnenrahmen für einen Fahrzeugsitz dadurch gelöst werden, dass ein tiefgezogenes Blechteil vorgesehen ist, welches den quer verlaufenden Rahmenbereich bildet, wobei das tiefgezogene Blechteil Flansche zur stoffschlüssigen Anbindung der Profile aufweist und mindestens eines der vertikal verlaufenden Profile ein Hohlprofil ist, welches aus zwei flanschlosen, rückfederungsarmen Halbschalen oder als flanschloses
Hohlprofil durch U/O-Umformung unter Verwendung eines Formkerns oder durch W/O-Umformung hergestellt ist.

Unter der T3-Technologie wird ein von der Anmelderin entwickeltes Umformverfahren verstanden, bei welchem eine Platine zu flanschlosen, rückfederungsarmen Halbschalen und anschließend ein Hohlprofil aus zwei flanschlosen Halbschalen hergestellt wird oder durch eine U/O-Umformung unter Verwendung eines Formkerns ein flanschloses Hohlprofil aus einer Platine hergestellt wird. Beiden unter dem Begriff T3-Technologie verstandenen Verfahren ist gemein, dass auf einfache und wirtschaftliche Weise ein flanschloses, strukturiertes Hohlprofil hergestellt wird, so dass ein kostspieliges Hydroumformen vermieden werden kann. Je nach gewünschter Stärke der Strukturierung der herzustellenden Hohlprofile kann auch eine W/O-Umformung angewendet werden, wobei die Platine zunächst W-förmig umgeformt und anschließend zu einem geschlossenen Hohlprofil umgeformt und verschweißt wird. Vorzugsweise erfolgt die T3-Umforung in einer einzigen Vorrichtung. Diese nicht erfindungsgemäße Variante des Lehnenrahmens kommt ebenfalls mit wenigen Bauteilen aus, wobei aufgrund der Verwendung von Hohlprofilen, die mit der T3-Technologie hergestellt sind, eine minimale Anzahl an Schweißnähten im gesamten Lehnenrahmen vorhanden sein kann, so dass eine maximale Festigkeit des Lehnenrahmens bei gleichzeitiger minimaler Teileanzahl bereitgestellt werden kann. Durch die Verwendung der Hohlprofile, welche mit der T3-Technologie hergestellt sind, können Hohlprofile bereitgestellt werden, welche komplexe Querschnittsänderungen aufweisen, so dass diese an die entsprechenden Belastungen spezifisch angepasst sind und dennoch nur eine Schweißnaht bei einem Platinenzuschnitt bzw. zwei Schweißnähte bei der Herstellung der Hohlprofile aus zwei Halbschalen besitzen. Die T3-Technologie erlaubt damit eine optimale Anpassung an entsprechende Designvorgaben bzw. Trends. Gleichzeitig sind die unter Verwendung der T3-Technologie hergestellten Hohlprofile flanschlos, so dass der Materialverbrauch und deren Gewicht entsprechend gering sind. Die Flansche des tiefgezogenen Blechteils werden zum Verbinden des Blechteils mit den jeweils vorgesehenen Profilen verwendet. Sie ermöglichen eine besonders einfache und stabile stoffschlüssige Anbindung der Hohlprofile an das quer verlaufende, tiefgezogene Blechteil.

Gemäß einer Ausgestaltung des alternativen Lehnenrahmens ist dieser für einen gurtintegrierten Fahrzeugsitz vorgesehen. Beispielsweise kann eine Anpassung dieses Lehnenrahmens auf einfache Weise durch eine höhere Steifigkeit eines Hohlprofils erreicht werden, so dass die beim gurtintegrierten Fahrzeugsitz auftretenden, erhöhten Kräfte durch den Lehnenrahmen aufgefangen werden können.

Wie bereits zuvor erläutert, kann eine gute Anpassung an die Verwendung mindestens eines Hohlprofils im im nicht erfindungsgemäßen Lehnenrahmen dadurch erfolgen, dass das Hohlprofil in axialer Richtung sich verändernde Querschnitte aufweist. Aufgrund der Verwendung der T3-Technologie sind der Komplexität der Formgebung der Hohlprofile relativ wenig Grenzen gesetzt, so dass eine optimale Anpassung der Querschnitte an die anwendungsbezogenen Belastungen erreicht werden kann, was im Ergebnis zu einem besonders geringen Materialeinsatz bei möglichst hoher Steifigkeit und möglichst geringem Gewicht resultiert.

Schließlich lässt sich eine Verbesserung des nicht erfindungsgemäßen Lehnenrahmens im Hinblick auf die Belastungen im Fahrzeugsitz dadurch erreichen, dass das tiefgezogene Blechteil und/oder mindestens eines der Profile aus einem "Tailored Blank" hergestellt sind. Das "Tailored Blank" erlaubt die Verwendung unterschiedlicher Materialgüten und Materialdicken in einem Blechteil und damit in einem Profil oder Tiefziehteil. Bei minimalem Materialeinsatz können damit weitere Verbesserungen im Hinblick auf das Gewicht und die mechanische Belastbarkeit des Lehnenrahmens erzielt werden.

Es gibt nun eine Vielzahl von Möglichkeiten, den erfindungsgemäßen Lehnenrahmen eines Fahrzeugsitzes auszugestalten und weiterzubilden. Hierzu wird verwiesen einerseits auf die dem Patentanspruch 1 nachfolgenden Patentansprüche sowie auf die Beschreibung von erfindungsgemäßen Ausführungsbeispielen in Verbindung mit der Zeichnung. Die Zeichnung zeigt in
Fig. 1 ein Ausführungsbeispiel eines erfindungsgemäßen Lehnenrahmens, aufweisend mindestens zwei Halbschalenbleche für einen normalen Fahrzeugsitz,
Fig. 2 ein zweites Ausführungsbeispiel eines erfindungsgemäßen Lehnenrahmens, umfassend zwei Blechhalbschalen für einen gurtintegrierten Fahrzeugsitz,
Fig. 3 in einer schematischen Aufsicht ein Ausführungsbeispiel eines nicht erfindungsgemäßen, alternativen Lehnenrahmens mit Profilen und einem tiefgezogenen Blechteil,
Fig. 4 in einer Detailansicht das Ausführungsbeispiel aus Fig. 3 im Verbindungsbereich zwischen vertikalem Rahmenbereich und quer verlaufendem Rahmenbereich,
Fig. 5 ein Hohlprofil, hergestellt unter Verwendung der T3-Technologie für das Ausführungsbeispiel aus Fig. 3 und
Fig. 6 in einer Draufsicht ein Blechzuschnitt für die Herstellung eines Hohlprofils nach Fig. 5.

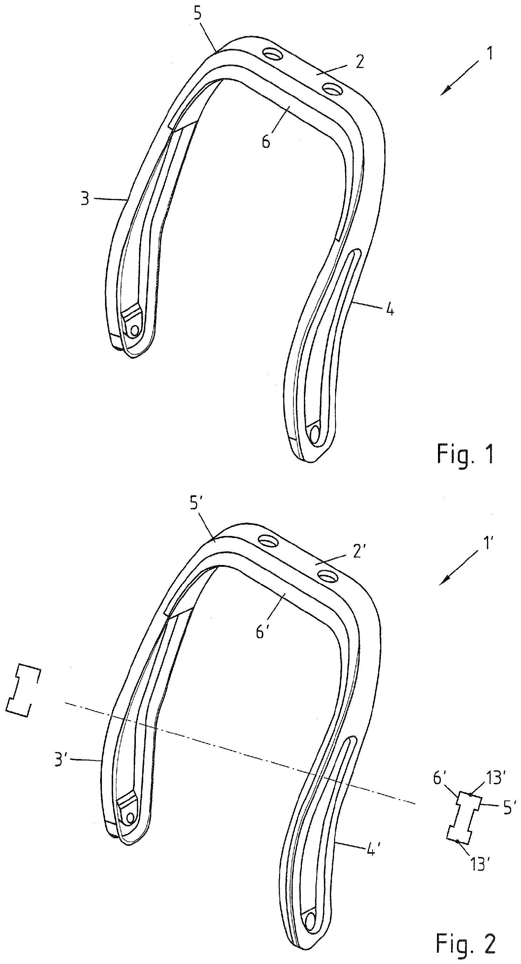

Fig. 1 zeigt zunächst in einer perspektivischen Darstellung ein erstes Ausführungsbeispiel eines erfindungsgemäßen Lehnenrahmens 1, welcher U-förmig ausgebildet ist. Der U-förmig ausgebildete Lehnenrahmen 1 besteht aus einer Halbschale 5, welche jeweils einen den quer verlaufenden Rahmenbereich bereitstellenden Teilbereich 2 und die vertikal verlaufenden Rahmenbereiche bildenden Teilbereiche 3 und 4 aufweist. Zusätzlich ist nun ein weiteres Halbschalenblech 6 vorgesehen, welches mit dem Halbschalenblech 5 stoffschlüssig verbunden, beispielsweise verschweißt ist. Das zweite Halbschalenblech 6 verstärkt zumindest den quer verlaufenden Rahmenbereich des Lehnenrahmens 2 und teilweise die vertikal verlaufenden Rahmenbereiche 3 und 4 des Lehnenrahmens 1.

Anders als in Fig. 1 ist in Fig. 2 ein zweites Ausführungsbeispiel des erfindungsgemäßen Lehnenrahmens dargestellt, welcher für einen gurtintegrierten Fahrzeugsitz vorgesehen ist. Der Lehnenrahmen 1' für gurtintegrierte Fahrzeugsitze weist neben der Halbschale 5', welche den U-förmigen Lehnenrahmen 1' im Wesentlichen bildet, zusätzlich ein Halbschalenblech 6' auf, welches sich entlang des rechten Schenkels des U-förmigen Lehnenrahmens 1' erstreckt und insofern nicht nur den quer verlaufenden Rahmenbereich 2', sondern auch den vertikalen Rahmenbereich 4' des Lehnenrahmens vollständig verstärkt. Durch diese Ausführung kann unter Verwendung von zwei Bauteilen ein Lehnenrahmen 1' für gurtintegrierte Fahrzeugsitze bereitgestellt werden, welcher einfach zu fertigen ist und die notwendige Steifigkeit zur Aufnahme der Kräfte bei der Integration des Gurtes in den Fahrzeugsitz ermöglicht. In der in Fig. 2 gezeigten Schnittebenen sind beispielsweise die Querschnitte der vertikal verlaufenden Rahmenbereiche des Lehnenrahmens dargestellt. Der vertikal verlaufende und verstärkte Rahmenbereich 4' des Lehnenrahmens 1' für gurtintegrierte Fahrzeugsitze weist beispielsweise eine geschlossene Querschnittsfläche auf, wohingegen der vertikal verlaufende Rahmenbereich 3' eine offene Querschnittsfläche aufweist. Zu erkennen in der Schnittebene sind auch die Schweißnähte 13', welche die Halbschalen 6' und 5' zur Bildung des verstärkten Rähmenbereichs 4' stoffschlüssig im Stumpfstoß verbinden.

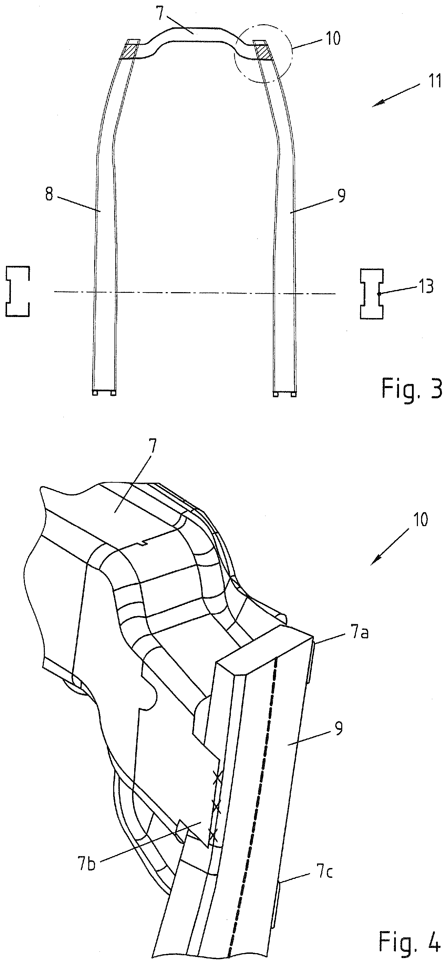

In Fig. 3 ist nun eine schematische Aufsicht eines Ausführungsbeispiels eines alternativen, nicht erfindungsgemäßen Lehnenrahmens 11, welcher aus einem tiefgezogenen Blechteil 7, einem offenen Profil 8 und einem Hohlprofil 9 besteht, dargestellt. Die Verwendung eines tiefgezogenen Blechteils 7 und eines offenen Profils 8 für einen Lehnrahmen 11 ist bereits bekannt. Im Unterschied dazu ist das Hohlprofil 9 unter Verwendung der T3-Technologie hergestellt und weist nur eine einzige Schweißnaht 13 auf. Die Struktur des Lehnenrahmens 11 ist aufgrund der geringen Anzahl an Teilen besonders einfach, und dennoch kann aufgrund der Verwendung des Hohlprofils 9, welche durch die T3-Technologie hergestellt worden ist, eine maximale Belastbarkeit des Lehnenrahmens erreicht werden. In Fig. 3 nicht dargestellt, ist die Möglichkeit, das Hohlprofil 9 unter Verwendung der T3-Technologie herzustellen, wobei zwei Schweißnähte beide flanschlosen Halbschalen im Stumpfstoß miteinander verbinden, so dass ebenfalls ein flanschloses Hohlprofil 9 bereitgestellt gestellt werden kann. Den Verbindungsbereich 10 zwischen dem Hohlprofil 9 und dem tiefgezogenen Blechteil 7 zeigt der Ausschnitt 10 in Fig. 4 in einer perspektivischen Darstellung. Die Flansche 7a, 7b, 7c des Blechteils 7 gewährleisten eine optimale Anbindung des tiefgezogenen Blechteils 7 an das Hohlprofil 9, um eine maximale Steifigkeit des Lehnenrahmens 11 zu gewährleisten. Wie bereits in Fig. 4 zu erkennen ist, weist das Seitenteil 9 einen sich verändernden Querschnitt in axialer Richtung auf. Diese Querschnittsänderungen lassen sich auf einfache Weise unter Verwendung der T3-Technologie zur Verfügung stellen.

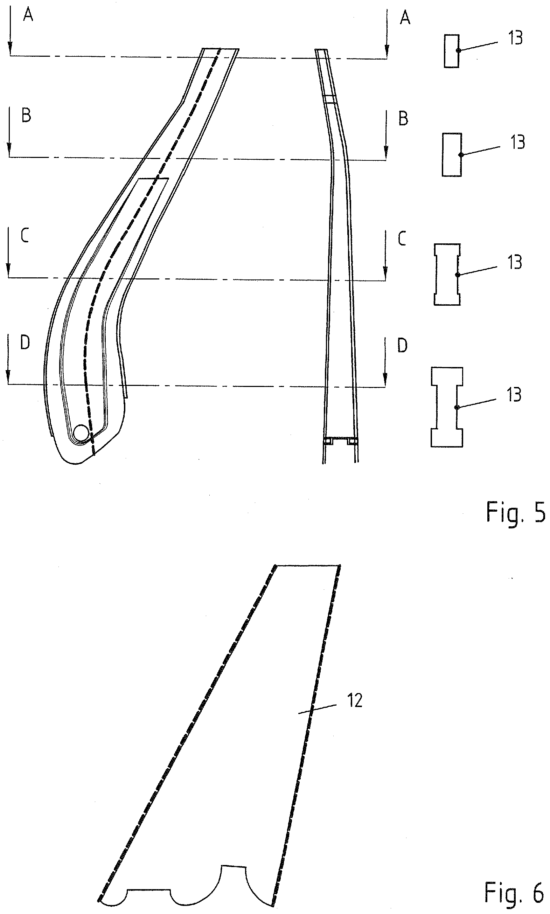

Wie beispielsweise der Querschnitt des Hohlprofils 9 an die Belastung angepasst ausgeprägt sein kann, zeigt Fig. 5. An den unterschiedlichen Schnitten A, B, C und D wächst der Querschnitt des Seitenteils stetig, so dass die mechanische Belastbarkeit des Hohlprofils 9 an die Verwendung als Lehnenrahmen im Fahrzeugsitz angepasst werden kann. Bei der Verwendung der T3-Technologie kann ein entsprechend komplexer Querschnittsflächenverlauf des Hohlprofils 9 durch einen Blechzuschnitt 12, wie er in Fig. 6 dargestellt ist, auf einfache Weise hergestellt werden. Das unter Verwendung der T3-Technologie hergestellte Hohlprofil 9 kann dann eine einzige Schweißnaht 13 aufweisen. Ist der Blechzuschnitt 12 ferner als "Tailored Blank" ausgebildet, kann eine weitere Optimierung an die Belastungssituation für die Verwendung des Hohlprofils im Lehnenrahmen eines Fahrzeugsitzes bereitgestellt werden.

## Patentansprüche

1. Lehnenrahmen (1, 1') für einen Fahrzeugsitz, welcher einen quer verlaufenden Rahmenbereich (2,2') sowie zwei vertikal verlaufende Rahmenbereiche (3,3', 4,4') aufweist und U-förmig ausgebildet ist, wobei eine erste Halbschale (5,5') aus einem Metall vorgesehen ist, welche jeweils einen Teilbereich der vertikal verlaufenden Rahmenbereiche (3,3', 4,4') des Lehnenrahmens (1,1') und jeweils einen Teilbereich des quer verlaufenden Rahmenbereichs (2,2') des Lehnenrahmens (1,1') bildet,
**dadurch gekennzeichnet, dass** ein zweites Halbschalenblech (6,6') vorgesehen ist, welches mit der ersten Halbschale (5,5') stoffschlüssig im Stumpfstoß verbunden ist und zumindest den quer verlaufenden Rahmenbereich (2,2') des Lehnenrahmens (1,1') verstärkt, wobei das zweite Halbschalenblech (6) U-förmig ausgebildet ist und zusätzlich zumindest teilweise beide vertikal verlaufende Rahmenbereiche (3,4) des Lehnenrahmens (1) verstärkt.

2. Lehnenrahmen nach Anspruch 1,
d a durc h **gekennzeichnet**, das s
der Lehnenrahmen (1') für einen gurtintegrierten Fahrzeugsitz vorgesehen ist und das zweite Halbschalenblech (6') mindestens einseitig einen der vertikal verlaufenden Rahmenbereiche (4') vollständig verstärkt.

3. Lehnenrahmen nach einem der Ansprüche 1 oder 2, **dadurch gekennzeichnet, dass** mindestens eine der Halbschalen (5,5', 6,6') aus einem "tailored Blank" hergestellt ist..

## Claims

1. Seat-back frame (1, 1') for a vehicle seat, which has a frame region (2, 2') extending transversely and two frame regions (3, 3', 4, 4') extending vertically and is of a U-shaped design, wherein a first half-shell (5, 5') made of a metal is provided, which in each case forms a partial region of the vertically extending frame regions (3, 3', 4, 4') of the seat-back frame (1, 1') and in each case forms a partial region of the transversely extending frame region (2, 2') of the seat-back frame (1, 1'), **characterised in that** a second half-shell sheet (6, 6') is provided, which is firmly bonded to the first half-shell sheet (5, 5') in a butt joint and which reinforces at least the transversely extending frame region (2, 2') of the seat-back frame (1, 1'), wherein the second half-shell sheet (6) is of a U-shaped design and additionally at least partially reinforces both vertically extending frame regions (3, 4) of the seat-back frame (1).

2. Seat-back frame according to claim 1, **characterised in that** the seat-back frame (1') is intended for a belt-integrated vehicle seat and, on at least one side, the second half-shell sheet (6') reinforces one of the vertically extending frame regions (4') completely.

3. Seat-back frame according to claim 1 or 2, **characterised in that** at least one of the half-shells (5, 5', 6, 6') is produced from a "tailored blank".

## Revendications

1. Cadre de dossier (1,1') pour un siège de véhicule, qui présente une zone de cadre s'étendant transversalement (2, 2') et deux zones de cadre s'étendant verticalement (3, 3', 4, 4') et qui est en forme de U, une première demi-coque (5, 5') en métal étant prévue, qui forme respectivement une zone partielle des zones de cadre (3, 3', 4, 4') s'étendant verticalement du cadre du dossier (1,1') et une zone partielle de la zone de cadre (2, 2') s'étendant transversalement du cadre de dossier (1, 1'), **caractérisé en ce qu'**une deuxième plaque de demi-coque (6, 6') est prévue, qui est reliée de manière cohésive à la première demi-coque (5, 5') dans l'articulation bout à bout et renforce au moins la zone de cadre (2, 2') du cadre de dossier (1, 1') s'étendant transversalement, la deuxième plaque de demi-coque (6) étant en forme de U et renforçant en outre au moins partiellement les deux zones de cadre (3, 4) du cadre de dossier (1) s'étendant verticalement.

2. Cadre de dossier selon la revendication 1, **caractérisé en ce que** le cadre de dossier (1') est prévu pour un siège de véhicule avec ceinture de sécurité intégrée et la deuxième plaque de demi-coque (6') renforce complètement au moins d'un côté l'une des zones du cadre (4') s'étendant verticalement.

3. Cadre de dossier selon l'une des revendications 1 ou 2, **caractérisé en ce qu'**au moins l'une des demi-coques (5, 5', 6, 6') est constituée d'un "tailored blank".
